# EUROPÄISCHE PATENTSCHRIFT

(11) **EP 1 121 984 B1**
(45) Veröffentlichungstag und Bekanntmachung des Hinweises auf die Patenterteilung: **09.06.2004**
(21) Anmeldenummer: 01101688.8
(22) Anmeldetag: 30.01.2001
(51) Int. Cl.: B04B 7/08, B04B 7/02, B04B 5/00, F16L 23/08

(54) **Zentrifuge mit einem Spannband als Montagemittel**
Centrifuge with a clamping strap as mounting means
Centrifugeuse avec collier de serrage comme moyen de montage

(30) Priorität: 31.01.2000 US 179266 P
(43) Veröffentlichungstag der Anmeldung: 08.08.2001
(73) Patentinhaber: Mann + Hummel GmbH, 71638 Ludwigsburg (DE)
(72) Erfinder: Miller, Andrew J., Plymouth, MI 48170 (US)
(74) Vertreter: Voth, Gerhard, Dipl.-Ing.

(56) Entgegenhaltungen:
- DE-A- 3 146 219
- DE-A- 3 729 372
- GB-A- 705 247
- US-A- 2 983 384
- US-A- 4 492 631

## Beschreibung

### Stand der Technik

Die Erfindung bezieht sich auf eine Zentrifuge, die einen Rotor und ein Gehäuse aufweist, wobei ein Spannband zur Montage von Einzelteilen der Zentrifuge zum Einsatz kommt, nach der Gattung des Patentanspruches 1.

Zentrifugen der eingangs beschriebenen Art sind bekannt. Z. B. offenbart die WO 99/30827 eine Zentrifuge, die einen Rotor aufweist, der aus verschiedenen Schalen hergestellt ist. Genauso besteht das Gehäuse aus mehreren Schalen. Die Gehäuseglocke ist aus Blech tiefgezogen, während der Gehäusesockel ein Gussteil ist. Der Gehäusesockel weist einen ringförmigen Absatz auf, auf dem die Glocke montiert ist, wobei ein ringförmiges Blechprofil als Band zum Einsatz kommt, um beide Bauteile miteinander zu verbinden. Dieses Band kann beispielsweise mittels bekannter Schraubverbindungen befestigt werden, wie z.B. in US-A-4492631. Hierbei kann z. B. das Prinzip eingesetzt werden, welches von Rohrschellen allgemein bekannt ist.

Die beschriebene Zentrifuge kann z. B. zur Filterung von Schmieröl einer Brennkraftmaschine in einem Kraftfahrzeug angewendet werden. Die Umgebung, in der eine solche Zentrifuge arbeitet, ist jedoch einer starken Verschmutzung ausgesetzt, sodass auch die Verschraubung durch Schmutz zugesetzt werden kann. Ähnlich verhält es sich bei Spannbändern, die zur Montage des Zentrifugenrotors angebracht werden. Diese sind zwar nicht der Umgebung der Brennkraftmaschine ausgesetzt, jedoch befinden sie sich in einem Bereich, in dem sich mit Partikeln kontaminiertes Schmieröl befindet. Eine Ablagerung dieser Partikel kann ebenfalls zu einer Verschmutzung der Schraubverbindung gemäß des Standes der Technik führen.

Andererseits werden die beschriebenen Spannbänder verwendet, um eine Demontierbarkeit der einzelnen Zentrifugenteile zu gewährleisten. Durch die Verschmutzung leidet bei wiederholtem Öffnen und Schließen des Spannbandes jedoch die Zuverlässigkeit der Schraubverbindung. Selbst bei Verwendung von selbstsichernden Muttern kann daher ein ungewünschtes spontanes Lösen der Schraubverbindung erfolgen, da der Zentrifugenrotor und das Gehäuse einer schwingenden Beanspruchung durch die Rotordrehung bzw. durch das Kraftfahrzeug und die Brennkraftmaschine ausgesetzt sind. Ein Lösen der Schraubverbindung bewirkt jedoch unabsehbare Folgen für das Funktionieren des Schmierölkreislaufs der Brennkraftmaschine. Im schlimmsten Falle kann die Brennkraftmaschine wegen Mangels an Schmieröl versagen.

Aufgabe der Erfindung ist es daher, eine Zentrifuge mit Spannbändem als Montagemittel zu schaffen, die über die gesamte Lebensdauer zuverlässig in ihrer Funktion ist. Diese Aufgabe wird durch die Merkmale des Patentanspruches 1 gelöst.

### Vorteile der Erfindung

Die erfindungsgemäße Zentrifuge weist in bekannter Weise ein Gehäuse und ein in diesem gelagerten Rotor auf. Aufgrund der rotationssymmetrischen Gestalt sind die Einzelteile schalenartig ausgeführt und können daher am äußeren Umfang unter Verwendung von Spannbändern aneinander befestigt werden.

Gekennzeichnet ist die Zentrifuge dadurch, dass das Spannband mittels einer Schraubverbindung zusammengehalten wird, welche mittels eines elastischen Bügels arretiert wird. In unverformten Zustand des Bügels kann daher die Schraubverbindung nicht geöffnet werden und sich daher auch nicht selbsttätig öffnen, da eine Drehbewegung der die Schraubverbindung bildenden Partner, also der Schraube oder der Mutter, verhindert wird. Um die Arretierung aufzulösen, kann der Bügel elastisch verformt werden. Sobald die Arretierung aufgehoben ist, kann die Schraubverbindung in bekannter Weise gelöst werden. Z. B. kann ein entsprechendes Werkzeug wie ein Schraubendreher oder ein Schraubenschlüssel angesetzt werden. Eine andere Möglichkeit besteht darin, dass die Schraubverbindung einen fest angebrachten Griff zum Lösen aufweist (z. B. eine Flügelmutter).

Gemäß der Erfindung besteht die Arretierung aus einer schlitzförmigen Öffnung, die z. B. als langgestrecktes Loch im Bügel ausgeführt sein kann. Dieser Schlitz weist parallele Seitenränder auf, wobei der zu verdrehende Teil der Schraubverbindung mindestens zwei parallele Wirkflächen aufweist, die mit den besagten Seitenrändern in direkter Verbindung stehen. Daher ist eine Verdrehung so lange nicht möglich, solange die beschriebenen Wirkflächen mit den Seitenrändern kommunizieren. Wird der Bügel elastisch verformt, insbesondere niedergedrückt, werden die Wirkflächen der Schraubverbindung freigegeben, so dass die Schraubverbindung gelöst werden kann. Die Wirkflächen können gleichzeitig dazu dienen, ein Öffnen der Schraubverbindung zu ermöglichen. Insbesondere kann der bewegliche Teil der Schraubverbindung als Sechskantmutter oder Sechskantschraube ausgeführt sein, wobei der Sechskant in bekannter Weise zum Lösen durch einen Schraubenschlüssel dient und drei parallele Wirkflächenpaare zur Verfügung stellt, welche mit den genannten parallelen Seitenrändern des Schlitzes im Bügel kommunizieren können.

Eine vorteilhafte Ausbildung der Erfindung ergibt sich, wenn die Schraubverbindung als Spannvorrichtung ausgeführt ist. Dies bedeutet, dass sich das Gewinde der Schraubverbindung entlang der Ausrichtung des Spannbandes befindet, so dass ein Anziehen der Schraubverbindung entsprechend dem Prinzip bekannter Rohrschellen zu einer Anspannung des Spannbandes führt. Eine andere Möglichkeit besteht in der Ausrichtung der Schraubverbindung im rechten Winkel zum Spannband. Dies führt vorteilhafter Weise zu einer sehr platzsparenden Variante, da bei sich überlappenden Enden des Spannbandes in dem einen Ende ein Gewinde vorgesehen werden kann, in das die Schraube eingedreht wird. Allerdings ist bei dieser Variante die Spannung des Spannbandes vorgegeben.

Eine vorteilhafte Variante der Erfindung sieht vor, dass der Bügel als Ende des Spannbandes ausgebildet ist. Dies ist eine Maßnahme zur Bauteilintegration und weiterhin zum Auffinden einer besonders platzsparenden Lösung. Das Spannband ist regelmäßig aus Federstahl oder dergleichen ausgeführt, so dass dieses Material gleichzeitig zur Anwendung kommen kann, um einen elastischen Bügel zu schaffen. In das umgebogene Ende kann dann der bereits erwähnte Schlitz eingebracht werden, welcher die Arretierung für die Schraubverbindung bildet. Vorteilhafte Varianten der Erfindung sehen vor, dass das Spannband bevorzugt zur Verbindung zweier Gehäuseschalen oder zweier Rotorschalen verwendet wird. Zu diesem Zweck umgreift das Spannband die beschriebenen Schalen an ihrem äußeren Umfang, welcher gleichzeitig Absätze aufweist, so dass eine formschlüssige Verbindung hergestellt werden kann. Alternativ ist es selbstverständlich auch denkbar, eine reibschlüssige Verbindung unter Aufbau einer genügend großen Spannung im Spannband herzustellen.

Diese und weitere Merkmale von bevorzugten Weiterbildungen der Erfindung gehen außer aus den Ansprüchen auch aus der Beschreibung und der Zeichnung hervor, wobei die einzelnen Merkmale jeweils für sich allein oder zu mehreren in Form von Unterkombinationen bei der Ausführungsform der Erfindung und auf anderen Gebieten verwirklicht sein und vorteilhafte sowie für sich schutzfähige Ausführungen darstellen können, für die hier Schutz beansprucht wird.

### Zeichnung

Weitere Einzelheiten der Erfindung werden in der Zeichnung anhand von schematischen Ausführungsbeispielen beschrieben. Hierbei zeigen
- Figur 1: die perspektivische Ansicht des Endes eines Spannbandes mit niedergedrücktem Bügel,
- Figur 2: das Spannband gemäß Figur 1 in geschlossenem Zustand in perspektivischer Ansicht,
- Figur 3: die Variante eines Spannbandes mit Schraubverbindung als Spannvorrichtung in der Seitenansicht und
- Figur 4: den Querschnitt durch eine Freistrahlzentrifuge zur Reinigung des Schmieröls einer Brennkraftmaschine.

### Beschreibung der Ausführungsbeispiele

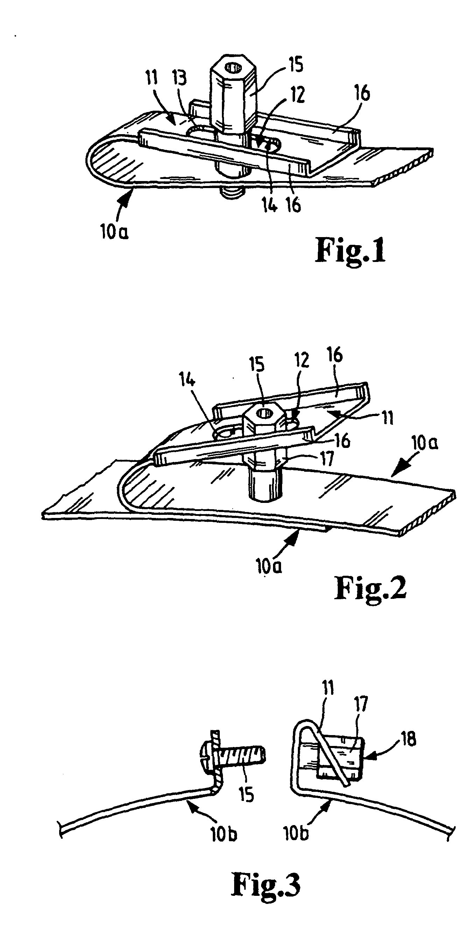

In Figur 1 ist das Ende eines Spannbandes 10a dargestellt. Dieses Ende ist umgebogen und bildet so einen Bügel 11, der als Arretierung 12 zum Einsatz kommt. Die Arretierung besteht aus einem Schlitz 13, mit parallelen Seitenrändem 14 (nur einer dieser Seitenränder ist sichtbar), wobei die Seitenränder mit einer Schraube 15 kommunizieren. Die Schraube 15 ist im Spannband durch ein (nicht sichtbares) Loch gesteckt. An den Seitenrändern des Bügels sind Verstärkungen 16 angebracht, die z. B. durch Umbiegen der Kanten erzeugt werden können.

In den folgenden Figuren sind gleiche Bauteile mit gleichen Bezugszeichen versehen und werden nicht noch einmal gesondert beschrieben, soweit sich keine Änderungen bezüglich Figur 1 ergeben.

In Figur 2 ist das Spannband gemäß Figur 1 im montierten Zustand dargestellt. Das andere Ende des Spannbandes 10a weist ein (nicht dargestelltes) Gewindeloch auf, welches mit der Schraube 15 im Eingriff steht. Auf diese Weise wird das Spannband 10a ringförmig geschlossen. Der Bügel 11 ist nun nicht mehr, wie in Figur 1 dargestellt, niedergedrückt, sondern in seiner entspannten Position. Dabei stehen die Seitenränder 14 mit zwei parallel ausgerichteten Flächen des Sechskants der Schraube im Eingriff, wobei diese Flächen als Wirkflächen 17 der Arretierung 12 wirken. Damit ist ein Aufdrehen der Schraube 15 wirksam verhindert.

In Figur 3 ist eine andere Variante des Spannbandes dargestellt. Beide Enden dieses Spannbandes sind zunächst rechtwinklig abgewinkelt, um am einen Ende die Schraube 15 und am anderen Ende eine Mutter 18 aufzunehmen. Die Schraube kann z. B. in bekannter Weise (nicht dargestellt) durch einen Vierkant in dem einen Ende gegen Verdrehung gesichert werden. Die Wirkflächen 17, die wie in Figur 2 dargestellt als Sechskant ausgeführt sind, sind im Ausführungsbeispiel gemäß Figur 3 an der Mutter 18 angebracht. Das zugehörige Ende des Spannbandes ist weiterhin entsprechend der in Figur 1 und 2 dargestellten Variante als Bügel 11 mit einem nicht näher dargestellten Schlitz ausgeführt.

Um das Spannband zu montieren, wird der Bügel 11 niedergedrückt, so dass die Mutter 18 drehbar ist. Durch Anziehen der Schraubverbindung, bestehend aus Schraube 15 und Mutter 18, wird gleichzeitig eine Spannung des Spannbandes aufgebaut. Bei genügend großer Spannung wird der Bügel 11 losgelassen und sichert auf diese Weise die Mutter 18. Wie bereits erwähnt, ist auch die Schraube 15 gegen Verdrehung gesichert, sodass sich die Schraubverbindung nicht selbsttätig lösen kann.

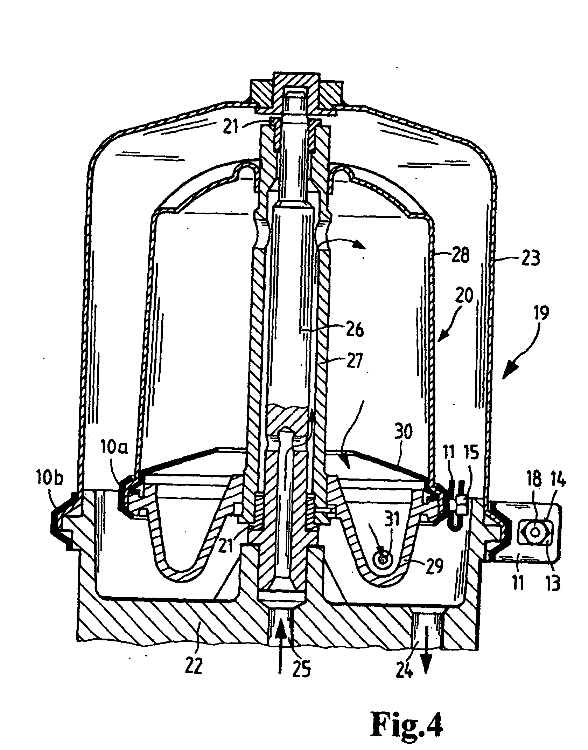

In Figur 4 ist eine Zentrifuge dargestellt, die ein Gehäuse 19 aufweist, in das ein Rotor 20 mittels Gleitlagern 21 eingebaut ist. Das Gehäuse weist einen Sockel 22 und eine Glocke 23 auf, welche mit Hilfe des Spannbandes 10b gemäß Figur 3 zusammengehalten werden. Im Sockel ist ein Auslass 24 für das zentrifugierte Öl und ein Einlass 25 für das zu zentrifugierende Öl vorgesehen. Der Weg des Öls durch die Zentrifuge ist durch Pfeile angedeutet. Es durchfließt dabei einen gehäusefesten Schaft 26 und ein Mittelrohr 27, welches als Teil des Rotors ausgeführt ist. Am Mittelrohr ist ein Rotormantel 28 und ein Düsenkörper 29 gelagert. Diese beiden Bauteile bilden Schalen, die zusammen mit einem Zwischenblech 30 mit Hilfe des Spannbandes 10a gemäß der Figuren und 2 zusammen gehalten wird. Während des Betriebs bildet sich im Rotormantel, geschützt durch das Zwischenblech, ein Filterkuchen, wobei die Zentrifuge durch die im Düsenkörper vorgesehenen Düsen 31 angetrieben wird. Durch die Düsen gelangt das zentrifugierte Fluid auch zum Auslass 24.

## Patentansprüche

1. Zentrifuge, aufweisend einen Rotor (20), der drehbar in einem Gehäuse (19) gelagert ist, wobei Rotor und Gehäuse aus einzelnen Schalen zusammengesetzt sind, die unter Verwendung mindestens einen Spannbandes (10a, b) aneinander befestigt sind, wobei das Spannband mittels einer Schraubverbindung (15, 18) zusammengehalten wird und wobei das Spannband einen elastischen Bügel (11) aufweist, **dadurch gekennzeichnet, dass** der elastische Bügel (11) in unverformtem Zustand mit der Schraubverbindung derart im Eingriff steht, dass eine Verdrehung der Schraubverbindung durch eine im Bügel angebrachte Arretierung (12) verhindert wird, und der Bügel zum Lösen der Schraubverbindung derart elastisch verformt werden kann, dass die Arretierung die Verdrehung der Schraube zulässt, wobei die Arretierung (12) aus einem Schlitz (13) besteht, welcher zwei parallele Seitenränder (14) aufweist, wobei der zu verdrehende Teil der Schraubverbindung parallele Wirkflächen (17) aufweist, die mit den Seitenrändem zur Verhinderung der Verdrehung im Eingriff stehen, und dass der Kontakt zwischen den Seitenrändern (14) und den Wirkflächen (17) durch die Verformung, insbesondere Niederdrücken, des Bügels aufgehoben werden kann.

2. Zentrifuge nach Anspruch 1, **dadurch gekennzeichnet, dass** der zu verdrehende Teil der Schraubverbindung eine Mutter (18) mit einem als Sechskant ausgeführten Bereich als Wirkflächen (17) für die Seitenränder (14) ist.

3. Zentrifuge nach Anspruch 1, **dadurch gekennzeichnet, dass** der zu verdrehende Teil der Schraubverbindung eine Schraube (18) mit einem als Sechskant ausgeführten Bereich als Wirkflächen (17) für die Seitenränder (14) ist.

4. Zentrifuge nach einem der vorherigen Ansprüche, **dadurch gekennzeichnet, dass** die Schraubverbindung als Spannvorrichtung für das Spannband (10a) ausgeführt ist.

5. Zentrifuge nach einem der vorherigen Ansprüche, **dadurch gekennzeichnet, dass** der Bügel (11) als Ende des Spannbandes (10a, b) ausgebildet ist, indem dieser umgebogen ist.

6. Zentrifuge nach einem der vorherigen Ansprüche, **dadurch gekennzeichnet, dass** das Spannband (10a) den Rotor (20) umgreift.

7. Zentrifuge nach einem der vorherigen Ansprüche, **dadurch gekennzeichnet, dass** das Spannband (10b) das Gehäuse (19) umgreift.

## Claims

1. Centrifuge, including a rotor (20), which is rotatably mounted in a housing (19), rotor and housing being assembled from individual shells, said shells being secured to each other using at least one tensioning band (10a, b), the tensioning band being held together by means of a screw connection (15, 18) and the tensioning band including a resilient yoke (11), **characterised in that** the resilient yoke (11), in the non deformed condition, engages with the screw connection in such a manner that a rotating of the screw connection is prevented by means of a locking means (12) which is mounted in the yoke, and for releasing the screw connection the yoke can be resiliently deformed in such a manner that the locking means permits the rotating of the screw, the looking means (12) comprising a slot (13), which includes two parallel side edges (14), the part of the screw connection to be rotated including active faces (17), which engage with the lateral edges to prevent the rotating, and **in that** the contact between the lateral edges (14) and the active faces (17) can be eliminated by means of the deforming, more especially depressing, of the yoke.

2. Centrifuge according to claim 1, **characterised in that** the part of the screw connection to be rotated is a nut (18) with a region which is in the form of a hexagon head as the active faces (17) for the lateral edges (14).

3. Centrifuge according to claim 1, **characterised in that** the part of the screw connection to be rotated is a screw (18) with a region which is in the form of a hexagon head as the active faces (17) for the lateral edges (14).

4. Centrifuge according to one of the previous claims, **characterised in that** screw connection is in the form of a clamping device for the tensioning band (10a).

5. Centrifuge according to one of the previous claims, **characterised in that** the yoke (11) is the end of the tensioning band (10a, b), by said tensioning band being bent around.

6. Centrifuge according to one of the previous claims, **characterised in that** the yoke (10a) embraces the rotor (20).

7. Centrifuge according to one of the previous claims, **characterised in that** the tensioning band (10b) embraces the housing (19).

## Revendications

1. Centrifugeuse comprenant un rotor (20) monté de façon à pouvoir tourner dans un boîtier (19), le rotor et le boîtier étant composés de coques distinctes fixées l'une à l'autre en utilisant à au moins une bande de serrage (10a, b), la bande de serrage étant maintenue à l'aide d'un assemblage par vis (15, 18) et présentant un étrier (11) élastique,
**caractérisée en ce que**
à l'état non déformé, l'étrier (11) élastique est en prise avec l'assemblage par vis de telle façon qu'on empêche une rotation de l'assemblage par vis grâce à une butée (12) disposée dans l'étrier et l'étrier peut être déformé élastiquement pour détacher l'assemblage par vis de telle façon que la butée (12) permet à la vis de tourner, la butée (12) étant constituée d'une fente (13) qui présente deux bords latéraux (14) parallèles, la partie qui doit tourner de l'assemblage par vis présentant des surfaces actives (17) parallèles qui sont en prise avec les bords latéraux pour empêcher une rotation, et le contact entre les bords latéraux (14) et les surfaces actives (17) peut être supprimé en déformant l'étrier, en particulier en exerçant sur lui une pression.

2. Centrifugeuse selon la revendication 1,
**caractérisée en ce que**
la partie qui doit tourner de l'assemblage par vis est un écrou (18) comportant une zone conçue en hexagone en tant que surface active (17) pour les bords latéraux (14).

3. Centrifugeuse selon la revendication 1,
**caractérisée en ce que**
la partie qui doit tourner de l'assemblage par vis est une vis (18) comportant une zone conçue en hexagone en tant que surface active (17) pour les bords latéraux (14).

4. Centrifugeuse selon l'une des revendications précédentes,
**caractérisée en ce que**
l'assemblage par vis est conçu sous forme de dispositif de tension pour la bande de serrage (10a).

5. Centrifugeuse selon l'une des revendications précédentes,
**caractérisée en ce que**
l'étrier (11) est conçu sous forme d'extrémité de la bande de serrage (10a, b) **en ce qu'**il est recourbé.

6. Centrifugeuse selon l'une des revendications précédentes,
**caractérisée en ce que**
la bande de serrage (10a) entoure le rotor (20).

7. Centrifugeuse selon l'une des revendications précédentes,
**caractérisée en ce que**
la bande de serrage (10b) entoure le boîtier (19).
